# EUROPEAN PATENT APPLICATION

(11) **EP 4 567 402 A1**
(43) Date of publication of application: **11.06.2025**
(21) Application number: 24217168.4
(22) Date of filing: 03.12.2024
(51) Int. Cl.: G01N 1/18

(54) **A DEVICE FOR SAMPLING LIQUIDS, A METHOD FOR SAMPLING LIQUIDS USING SAID DEVICE AND USES THEREOF**

(30) Priority: 08.12.2023 SI 202300155
(71) Applicant: Geoloski zavod Slovenije, 1000 Ljubljana (SI); Institut za vode Republike Slovenije, 1000 Ljubljana (SI)
(72) Inventor: Mali, Nina, 1000 Ljubljana (SI); Kovac Virsek, Manca, 1290 Grosuplje (SI); Bizjak, Nejc, 1433 Radece (SI); Bizjak, Tine, 1000 Ljubljana (SI)
(74) Representative: Patentni Biro AF d.o.o.

(57) **Abstract**

The present invention belongs to the field of devices for sampling liquids. The invention relates to a device for sampling liquids, a method for sampling liquids using said device and uses of the device and the method. The device for sampling liquids comprises:
- an inlet pipe (2, 2') with at least two legs, wherein on one leg the inlet pipe (2, 2') is configured for connection to a pump or pumping site (3, 3'), and on the second leg the inlet pipe is configured for connection to a distribution unit (4, 4'),
- a connection pipe (41a) between the inlet pipe (2, 2') and the distribution unit (4, 4'), wherein the connection pipe may be in the same level as the inlet pipe (2, 2') and the distribution unit (4, 4') or the connection pipe is under the distribution unit (4, 4'),
- the distribution unit (4, 4') having at least two, preferably three or four, symmetrically arranged legs, wherein at least two remaining legs are (41b) are configured for connection to a corresponding sampling unit (6, 6'), and wherein a pressure measuring device (42, 42') is installed in the distribution unit (4, 4'), and
- at least two sampling units (6, 6'), which are essentially pipe elements provided with a valve (61, 61'), at least one filter holder (62, 62') configured to receive at least one filter, and a flow measuring device (63, 63') installed upstream or downstream the filter holder (62, 62').

## Description

### Field of the invention

The present invention belongs to the field of devices for sampling liquids, particularly for sampling drinking water and groundwater for the purpose of determining the presence of particles. The invention relates to a device for sampling liquids, a method for sampling liquids using said device and uses of the device and the method.

### Background of the invention and the technical problem

Water is an inorganic compound and is a clear matter without smell or taste. It represents a main component of the Earth's hydrosphere and liquids in all known living organisms, wherein it functions as a solvent. Majority of water in liquid state can be found in seas and oceans, whereas a smaller part is found in surface and groundwater, glaciers and ice plates. In air, water is present as vapour, clouds comprising ice and liquid water suspended in air and precipitations. Water continuously circulates in a so called water circle of evaporation, transpiration (evapotranspiration), condensation, precipitation and watercourses that usually reach the sea.

Water is an important natural source due to its crucial role in living organisms. Ensuring water quality is essential to allow use in food, agriculture, and other fields. As water is a good solvent, inorganic and organic matter can dissolve in it, which can affect purity and quality. Monitoring is ensured by sampling and analysis, which also includes analysing presence of organisms and particles in water, which serves as an indication for consumption and further use.

One of emerging and less studied pollutants is microplastic. This term covers plastic particles with size less than 5 mm, which have different compositions and sizes.

Microplastic is separated into a primary microplastic, which enters the environment directly, and secondary microplastic, which is generated by decomposition of larger pieces into smaller due to environmental effects.

Microplastic is present in different environments and its effect on ecosystems and organisms is not yet elucidated. Scientific articles report its presence, accumulation and persistence in the sea and marine organisms and thus the potential for accumulation in organisms higher up the food chain, including humans. Some types of microplastics contain toxic substances, while heavy metals and pathogens can also accumulate (adsorb) on the surface of the particles. All these substances are released into the body when ingested, which can be harmful to health.

Methods for determination of microplastic in water are thus essential for monitoring of water state and ensuring its quality or suitability of methods for removing microplastics from water. Currently known water sampling devices are not suitable for determining presence of microplastics, as they do not allow comparable measurements without sample contamination.

At the same time, determination of other components or pollutants often requires reliable sampling in several sample, thus the technical problem addressed by the present invention is design of a device for sampling liquids, particularly water, that addresses disadvantages of known solutions.

### Prior art

Patent application CN107807005 discloses a portable seawater sampling that comprises a housing, a water inlet formed in the upper end of the housing, a first screen, a second screen, a water outlet formed in the lower end of the housing, a spray head, an exhaust opening, an electrothermal ultrasonic generator arranged in the housing and connected with the water inlet, and a pressure and flow control device arranged outside the housing and connected with the water inlet. This solution does not allow sampling multiple samples or parallels at once.

Patent application CN108507837 discloses a multi-cavity sampling device for microplastic on surface water. The device differs from the present invention in the arrangement, shape, and the sampling method.

Patent application CN109946119 relates to a device comprising a water pumping device and a sampler, wherein the water pumping device is connected to the sampler through a connecting pipeline, a gate valve, a pressure meter, a flow meter, and a check valve are sequentially arranged on the connecting pipeline. The sampler comprises multiple sampling units, each sampling unit corresponds to one sampling water layer, a water filtering unit is arranged on each sampling unit and is provided with an inner coarse filtration net, a fine filtration part and an outer coarse filtration assembly from inside to outside sequentially, the outer coarse filtration assembly comprises a first coarse filtration net and a second coarse filtration net, the fine filtration part is arranged between the inner coarse filtration net and the first coarse filtration net, and the second coarse filtration net is arranged at the outermost end. Direct extraction of multiple water-layer microplastic samples can be realized. This solution has sequentially arranged sampling units, which differs from the present invention.

Patent KR102422951 describes a complicated sampling device comprising an inlet pipe along which water is led to a filter arranged to collect microplastics for further analysis. In comparison to the present invention, which is much simpler, there are several differences in the shape of components and their arrangement. Based on the construction shown in this document, the device is suitable for laboratory analysis once a water sample is already taken from the environment. In contrast, the present invention enables sampling in several samples directly in the field without sample manipulation.

### Description of the solution to the technical problem

The present invention addresses the disadvantages of known solutions and ensures liquid sampling in several parallel samples with decreased possibility of contamination and enhanced control of flows and pressures in all parts of the device. Parallels are intended primarily in the sense that subsamples can be collected simultaneously on multiple filters, which can be analysed separately, thereby shortening the sampling time and obtaining a more representative sample. The technical problem is solved as defined in independent claims, while the preferred embodiments are defined in dependent claims.

The essence of the device for sampling liquids according to the invention is in that it comprises:
- an inlet pipe with at least two, preferably three, legs, wherein in one leg the inlet pipe is arranged for connection to a pump or a pumping site, in a second leg, preferably on the same axis as the inlet pipe the latter is arranged for connection to a distribution unit, and in the optional third leg an optional side leg with a valve is provided, said side leg arranged to allow leading the liquid pass sampling units,
- the distribution unit having at least two, preferably more, symmetrically arranged legs for connection to a corresponding sampling unit, wherein the inlet pipe may be installed from below in the middle of the distribution unit or the connection to the inlet pipe is ensured in the same plane as the inlet pipe via one connection pipe,
- at least two sampling units, which are essentially pipe elements with a perpendicular knee, provided with a valve, at least one holder for receiving at least one filter, preferably with a filter arranged to filter the required material, particle and/or organism in the sampled liquid, and a flow measuring device installed before or preferably after the filter holder, which prevents possible sample contamination, and optionally a bypass past the sampling units, wherein the bypass is a pipe element with a suitable valve on the inlet pipe,
- optionally, an outlet arranged for connection to each sampling unit separately and optionally with the bypass.

The sampling unit has a flow measuring device for determination of the amount of filtered liquid per sample, as this information is important in analysis of filtered particles or organisms for ensuring measurement comparability. The perpendicular knee in the sampling unit ensures a correct position of the filter holder with filters facing downwards, which is important during sampling. The holder of the filter can comprise two tapered cylinders, which are essentially shorter pipe elements with a flange, and a seal installed such that two connected tapered cylinders prevent water passage past the filter. The suitable filter selected based on the selected liquid for sampling and the needed components are installed between both tapered cylinders. The seal can be any suitable seal, preferably a natural seal. Additionally, the filter holder may be provided with a reinforcement that prevents bending and moving of the filter. The reinforcement may be designed as a plate with holes or as a mesh. The described filter holder with removable filters thus enables water filtration without contact with the environment, wherein the filter is removed from the system and can be immediately analysed without sample manipulation. The device enables sequential arrangement and installation of more than one filter holder per sampling unit, which allows cascade sampling with different filter sizes or pre-filtering of larger particles.

The preferred embodiment comprises three sampling units, wherein the distribution unit is shaped with symmetrically distributed legs for ensuring equal pressure and flow of the sampled liquid. Embodiments with more sampling units are possible, in case simultaneous sampling of a larger number of samples is required, wherein the distribution unit is again symmetrically shaped to ensure even flow.

The pressure measuring device may be installed in the distribution unit, preferably in the centre of the distribution unit. This position has the lowest disturbance of the liquid flow and thus minimally affects sampling and consequent measurements. In case of increased pressure above the pre-set threshold, which is usually 4 bar, the system is arranged to shut off manually or automatically or the liquid is led via the bypass past the sampling units. The bypass enables leading the liquid before sampling, thus assuring representative samples. This is particularly important during sampling from holes, wherein at the beginning of pumping the water is slightly turbid.

The device according to the invention is made from an inert material resistant to rusting. Optimally, the device is made from stainless steel or inox material, respectively. For sampling microplastic it is desired to eliminate presence of plastic parts before filters, hence the preferred embodiment has flow measuring devices installed after the filters, as the flow measuring devices may comprise plastic parts, which could potentially affect results of the sampled liquid, as well as rotating components, which can affect liquid flow and particles in it.

A method of sampling liquid, preferably water, using the device as described above, comprises the following steps:
a) connecting the device via the inlet pipe to a pump or a pumping station,
b) turning on the pump, pre-pumping or system purification of the system with the sampled liquid, wherein the filter is not yet inserted, but all valves are open,
c) closing inlet valves to sampling units and turning off the pump or leading the liquid via the bypass,
d) inserting filters into filter holders and installation into the sampling units, wherein it is possible to sequentially instal more than one filter holder per sampling unit,
e) turning on the pump, if it was previously turned off, and leading liquid past the device,
f) leading the liquid into the device by opening valves in sampling units and closing the bypass,
g) after the sampling is finished, closing the valve in side branches and opening the bypass,
h) turning off the pump,
i) closing the valve for the distribution unit,
j) removing filters from the sampling units, wherein in the preferred embodiment of the method a vacuum pump is used to remove liquid from the system such that the filters are dry when they are removed from the holders and placed in Petri dishes.

The above-described device and method may be used in analysis of any suitable liquids, preferably in sampling water, including lakes, rivers, sea, groundwater, tap water pumping sites and similar. In a preferred embodiment it is used for sampling microplastic in water, wherein suitable filters are used that enable collection of microplastic particles for subsequent quantification. Sampling microplastic requires that the components of the system are without or with minimal number of plastic parts, as this ensures high-quality sampling with minimized or absent contaminations due to plastic parts.

The device according to the invention enables consistency of sampling in the field and allows sampling of several parallel samples simultaneously. By performing direct filtration in at least two enclosed sampling units, possibility of sample contamination from other sources is eliminated, which is particularly relevant for sampling microplastic. The device also enables cascade sampling with different filters in one system.

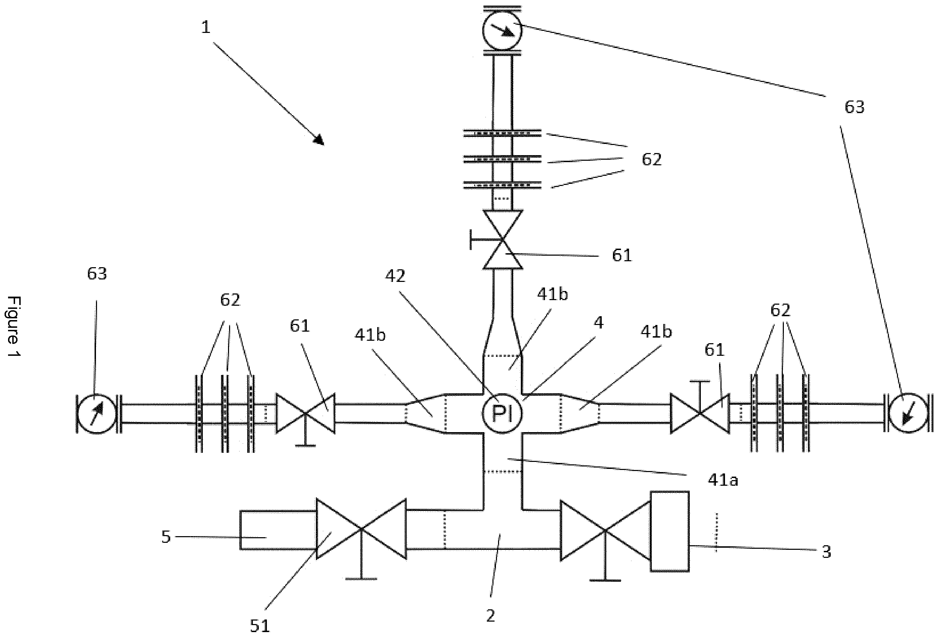

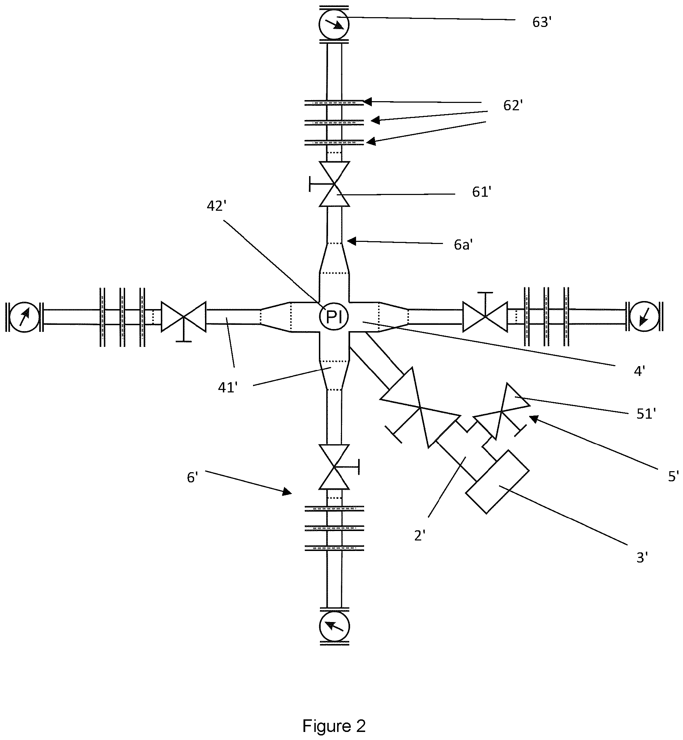

The invention will be described in further detail based on exemplary embodiments and figures 1 and 2, which show two exemplary embodiments of the device according to the invention.

Figure 1 shows a first embodiment of the device 1 for sampling liquids comprising:
- an inlet pipe 2 with three legs, wherein in one leg the inlet pipe is arranged for connection to a pump or a pumping site 3, a second leg is arranged for connection to a distribution unit 4, and a third leg is arranged to ensure a bypass 5 of the liquid past the sampling units,
- the distribution unit 4 having four symmetrically arranged legs shaped as a cross, wherein the first leg is essentially a connection pipe 41a arranged for connection to the inlet pipe, and the remaining three legs 41b are arranged for connection to a corresponding sampling unit, wherein in the centre of the distribution unit 4 a pressure measuring device 42 is installed,
- three sampling units 6, which are essentially pipe elements provided with a valve 61, at least one filter holder 62 arranged to receive at least one filter configured for filtration of the desired material particles and/or organisms in the sampled liquid, and a flow measuring device 63 installed downstream of the filter holder to prevent sample contamination, wherein the filter holder 62 are installed so that the filter is horizontal during the sampling and the sample liquid runs through the filter vertically (perpendicularly to the filter), thus ensuring as uniform flow through the whole filter surface as possible and reducing the impact of gravity on the flow through the filter, while at the same time allowing easier removal of the filters without loss of the sampled material,
- a bypass 5 past the sampling units, wherein the bypass is designed as a pipe element with a suitable valve 51.

The device may be provided with an outlet arranged for connection to each of the sampling units separately and optionally to the bypass. The dashed lines behind the valves 61 indicate a 90-degree turn of the sampling unit pipe, i.e. the above-mentioned elbow, so that the water flows in the desired direction to the filter, as described above.

Figure 1 shows a solution with three sequentially positioned filters in each sampling unit, however, a different number of holders or filters can be installed based on the planned use of the device and the sampling site.

Figure 2 shows a second embodiment of the device 1' for sampling liquids, which comprises:
- an inlet pipe 2' with at least two, preferably three legs, wherein in one leg the inlet pipe is arranged for connection to a pump or a pumping site 3', a second leg is arranged for connection to a distribution unit 4', and a third leg is arranged to ensure a bypass 5' of the liquid past the sampling units,
- the distribution unit 4' having four symmetrically arranged legs 41' for connection to the corresponding sampling unit 6', wherein the inlet pipe 2' is installed from below in the centre of the distribution unit 4' or the connection to the inlet pipe 2' is provided in the same level as the inlet pipe 2' using one connection pipe, wherein in the centre of the distribution unit 4' a pressure measuring device 42' is installed,
- four sampling units 6', which are essentially pipe elements provided a perpendicular knee 6a', provided with a valve 61', three filter holders 62' arranged to receive one filter configured for filtration of the desired material particles and/or organisms in the sampled liquid, and a flow measuring device 63' installed upstream or preferably downstream of the filter holder 62' to prevent sample contamination,
- a bypass 5' past the sampling units, wherein the bypass is designed as a pipe element with a suitable valve 51' on the inlet pipe 2',
- and optionally an outlet of the device arranged for connection with each sampling unit separately and optionally the bypass.

## Claims

1. A device (1, 1') for sampling water, said device comprising:
- an inlet pipe (2, 2') with at least two legs, wherein on one leg the inlet pipe (2, 2') is configured for connection to a pump or pumping site (3, 3'), and on the second leg the inlet pipe is configured for connection to a distribution unit (4, 4'),
- a connection pipe (41a) between the inlet pipe (2, 2') and the distribution unit (4, 4'), wherein the connection pipe may be in the same level as the inlet pipe (2, 2') and the distribution unit (4, 4') or the connection pipe is under the distribution unit (4, 4'),
- the distribution unit (4, 4') having at least two, preferably three or four, symmetrically arranged legs, wherein at least two remaining legs are (41b) are configured for connection to a corresponding sampling unit (6, 6'), and wherein a pressure measuring device (42, 42') is installed in the distribution unit (4, 4'), and
- at least two sampling units (6, 6'), which are essentially pipe elements provided with a valve (61, 61'), at least one filter holder (62, 62') configured to receive at least one filter, and a flow measuring device (63, 63') installed upstream or downstream the filter holder (62, 62').

2. The device (1, 1') according to claim 1, wherein
- the inlet pipe (2, 2') comprises three legs and the third leg is arranged to provide a bypass (5, 5') of the liquid past the sampling units (6, 6'),
and the device further comprises:
- the bypass (5, 5') past the sampling units (6, 6'), wherein the bypass (5, 5') is a pipe element provided with a suitable valve (51, 51').

3. The device (1, 1') according to claim 1 or claim 2, wherein the device further comprises an outlet arranged for connection to each sampling unit (6, 6') separately and optionally to the bypass (5, 5').

4. The device (1, 1') according to any of the preceding claims, wherein the device (1) further comprises:
- a distribution unit (4, 4') provided with at least three or four symmetrically arranged legs, which is configured for connection to the corresponding sampling unit (6, 6'), and
- at least three or four sampling units (6, 6').

5. The device (1, 1') according to the preceding claim, wherein the distribution unit (4) is shaped as cross with four symmetrically distributed legs, wherein the first leg is a connection pipe (41a), and the remaining three legs (41b) lead to the sampling units (6).

6. The device (1, 1') according to any of the preceding claims, wherein the filter holder (62, 62') comprises two tapered cylinders, which are essentially short pipe elements with a flange, and a seal installed such that two connected tapered cylinders prevent water passage past the filter, wherein a suitable filter is installed between both tapered cylinders.

7. The device (1, 1') according to claim 6, wherein the filter holder is provided with a reinforcement, which prevents bending and movement of the filter, wherein the reinforcement is preferably designed as a plate with holes or as a mesh.

8. The device (1, 1') according to any of the preceding claims, wherein which is arranged to insert more than one filter holder (62, 62') in each sampling unit (6, 6').

9. The device (1, 1') according to any of the preceding claims, wherein the filter is arranged for filtration of the desired material, particle and/or organisms in the sampled liquid.

10. The device (1, 1') according to the preceding claim, wherein the filter is any filter suitable for filtration of microplastics.

11. The device (1, 1') according to any of the preceding claims, wherein the device is made from an inert material resistant to corrosion, preferably from stainless-steel.

12. A method for sampling liquids using the device (1, 1') according to any of the preceding claims, comprising the following steps:
a) connecting the device (1, 1') via the inlet pipe to a pump or a pumping station (3, 3'),
b) turning on the pump, pre-pumping and system purification with the sampled liquid, wherein the filters are not yet inserted, but all valves are open,
c) closing inlet valves to sampling units and turning off the pump or leading the liquid via the bypass (5, 5'),
d) inserting filters into filter holders (62, 62') and installation into the sampling units (6, 6'), wherein it is possible to sequentially instal more than one filter holder (62, 62') per sampling unit (6, 6'),
e) turning on the pump, if it was previously turned off, and leading liquid past the device,
f) leading the liquid into the device (1, 1') by opening valves (61, 61') in sampling units (6, 6') and closing the bypass (5, 5'),
g) after the sampling is finished, closing the valves (61, 61') and opening the bypass (5, 5'),
h) turning off the pump,
i) closing the valve for the distribution unit,
j) removing filters from the sampling units (6, 6'), wherein preferably a vacuum pump is used to remove liquid from the system.

13. The method according to claim 12, wherein in case of increased pressure over the pre-defined threshold the system shuts down manually or automatically or the liquid is led via the bypass (5, 5') past the sampling units (6, 6').

14. The method according to claim 12 or 13, wherein before sampling the liquid is led through the bypass (5).

15. Use of the device (1, 1') and/or the method according to any of the preceding claims in liquid analysis, preferably in water analysis, including lakes, rivers, sea, underground water or drinking water pumping stations.
